# NEUE EUROPÄISCHE PATENTSCHRIFT

(11) **EP 3 359 351 B2**
(45) Veröffentlichungstag und Bekanntmachung des Hinweises auf die Entscheidung über den Einspruch: **23.04.2025**
(45) Hinweis auf die Patenterteilung: 25.08.2021
(21) Anmeldenummer: 16794501.3
(22) Anmeldetag: 05.10.2016
(51) Int. Cl.: B25J 9/16, B25J 13/08, B25J 15/02

(54) **GREIFVORRICHTUNG MIT INTEGRIERTEM REGLER**
GRIPPING DEVICE HAVING AN INTEGRATED CONTROLLER
DISPOSITIF DE PRÉHENSION À RÉGULATEUR INTÉGRÉ

(30) Priorität: 05.10.2015 DE 102015012779; 04.10.2016 DE 102016011761
(43) Veröffentlichungstag der Anmeldung: 15.08.2018
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2016/000360
(87) Internationale Veröffentlichungsnummer: WO 2017/059839

(56) Entgegenhaltungen:
- EP-A2- 0 205 141
- DE-A1- 102013 107 701
- US-A1- 2010 123 325
- US-A1- 2014 156 066
- US-B1- 6 463 835

## Beschreibung

Die Erfindung betrifft eine Greifvorrichtung zum mechanischen Greifen von Werkstücken mittels bewegbarer Greifarme, die ein Gehäuse, bewegbare Greifarme und einen in einem Gehäuse untergebrachten Antrieb umfasst, der die bewegbaren Greifarme antreibt.

Aus der DE 10 2006 045 783 B4 ist eine derartige Greifvorrichtung bekannt. Der elektrische Antrieb der Greifvorrichtung wird von einem universellen, der speicherprogrammierbaren Steuerung zugeordneten Servoregler geführt. Der Elektromotor und der Dreh- oder Weggeber des Antriebs ist jeweils über geschirmte Leitungen mit der externen Steuerung verbunden.

Die US 2014/156066 A1 und DE 10 2013 107701 A1 offenbaren eine Greifvorrichtung mit einem Gehäuse, bewegbaren Greifarmen und einem elektrischen Antrieb, der die Greifarme antreibt, wobei im Gehäuse eine Datenschnittstelle für eine externe SPS, ein Rechner- und Speichermodul und ein Servoregler angeordnet sind. Die US 6 463 835 B1 offenbart eine elektrische Spannvorrichtung für eine Werkzeugmaschine mit einem Gehäuse, bewegbaren Greifarmen und einem elektrischen Antrieb, der die Greifarme antreibt, wobei im Gehäuse eine Datenschnittstelle für eine externe SPS, ein Rechner- und Speichermodul und ein Servoregler angeordnet sind. Die US 2010/123325 A1 und EP 0 205 141 A2 offenbaren eine Greifvorrichtung mit einem Gehäuse, bewegbaren Greifarmen und einem pneumatischen oder hydraulischen Antrieb, der die Greifarme antreibt.

Der vorliegenden Erfindung liegt die Problemstellung zugrunde, eine Greifvorrichtung zu entwickeln, die mit einem minimalen Verschaltungs- und Programmieraufwand zumindest an die Maschinensteuerung adaptierbar ist. Auch soll die Handhabung und die Anpassung an verschiedene Greifaufgaben erleichtert werden.

Diese Problemstellung wird zum einen mit den Merkmalen des Patentanspruchs 1 gelöst. Dabei weist das Gehäuse des pneumatischen oder hydraulischen Antriebs mindestens einen Positionssensor und mindestens einen Drucksensor aufweist. Im oder direkt am Gehäuse der Greifvorrichtung ist erstens eine Datenschnittstelle für eine Punkt-zu-Punkt-Kommunikation mit einer speicherprogrammierbaren Steuerung angeordnet. Zweitens ist in ihr mindestens ein Rechner- und Speichermodul angeordnet, das die Anwendungssoftware der Greifvorrichtung umfasst. Drittens ist in ihr ein Regler angeordnet, der mindestens einen Positionsregler, mindestens einen Druckregler, die Ansteuerung des pneumatischen oder hydraulischen Antriebs und Schnittstellen für Drucksensoren und/oder mindestens ein Weg- oder Positionsmesssystem aufweist.

Alternativ wird die Problemstellung mit den Merkmalen des Patentanspruchs 4 gelöst. Dabei hat bei einem elektrischen Antrieb entweder der Antriebsmotor einen Drehgeber oder mindestens eines der mit den Greifarmen bewegten Bauteile weist ein Wegmesssystem auf. Im oder direkt am Gehäuse der Greifvorrichtung ist erstens eine Datenschnittstelle für eine Punkt-zu-Punkt-Kommunikation mit einer speicherprogrammierbaren Steuerung angeordnet. Zweitens ist in ihr mindestens ein Rechner- und Speichermodul angeordnet, das die Anwendungssoftware der Greifvorrichtung umfasst. Drittens ist in ihr ein Servoregler angeordnet, der die Ansteuerung des Antriebsmotors und eine Geberschnittstelle für den Drehgeber oder das Wegmesssystem aufweist. Im oder am Gehäuse der Greifvorrichtung ist der Servoregler angeordnet, der einen geschlossenen Kaskadenregler aufweist. Dabei umfasst der Kaskadenregler mindestens eine Lageregelung, eine Geschwindigkeitsregelung und eine Stromregelung.

In das Gehäuse der Greifvorrichtung ist ein vollwertiger Servoregler, bzw. Servoachsregler, zusammen mit einem dazugehörigen Rechner- und Speichermodul, eingebaut. Der Servoregler wird werkseitig so programmiert, dass der Endnutzer, bzw. der Maschinenbediener, keine besonderen Fachkenntnisse benötigt, um die Greifvorrichtung auf die entsprechenden Greifgüter bzw. Werkstücke einzustellen. Dabei können die Greifgüter sowohl formsteif als auch elastisch sein.

Neben den einfachen Parametern wie z.B. dem Greifhub und dem elastizitäts- und greifweitenabhängigen Greifhubzuschlag, können im Rechner- und Speichermodul für bestimmte, z.B. kundenspezifische Greifgüter, spezielle, katalogisierte Greifrezepturen abgelegt sein, die vom Maschinenbediener über eine Greifgutnummer aufgerufen werden können. Auf diese Weise ist ein schnelles Umstellen zwischen zwei verschiedenen, bekannten Greifaufgaben möglich.

Hierzu sitzt der Servoregler und das dazugehörige Rechner- und Speichermodul direkt im Gehäuse der Greifvorrichtung. Alle greifvorrichtungsspezifischen Werte und Reglereinstellungen werden direkt in der Greifvorrichtungssoftware herstellerseitig einprogrammiert. Im Ergebnis wurde dazu gegenüber dem allgemeinen Stand der Technik u.a. die Lage der Schnittstelle zwischen den Steuerungsbereichen verschoben. Teile der externen Steuerung werden in das Greifvorrichtungsgehäuse verlagert und an den Antrieb speziell angepasst.

Nun können Greifrezepturen für neue Greifaufgaben vom kundenseitigen Maschinenbediener handgesteuert angelernt und in vorrichtungsseitigen Rechner- und Speichermodul direkt und dauerhaft, z.B. zusammen mit einer neuen Greifgutnummer, abgespeichert werden. Als neue Greifgutnummer wird entweder die nächste freie Nummer automatisch gewählt oder sie wird numerisch über die SPS-Eingabetastatur eingegeben. Auch andere Einricht- oder Anlernvorgänge werden in der Regel über diese Tastatur vorgegeben und über das SPS-Display optisch überprüft.

Selbstverständlich lassen sich vom Maschinenbediener auch greifgutnummerabhängige Datensätze zur Manipulation ändern oder löschen, ohne dass hierzu in die werkzeugmaschinenseitige, speicherprogrammierbare Steuerung eingegriffen werden muss.

Im greifvorrichtungseigenen Rechner- und Speichermodul sind optional Mess- und Auswertealgorithmen einprogrammiert, die während der üblichen Greiffunktion auch Umfeldparameter wie Gehäusetemperatur, Gehäuseschwingungen, Körperschall u.s.w. messen und protokollieren können. Diese Daten werden in eine Verschleißstatistik umgesetzt, um hieraus den Zeitpunkt der nächsten Wartung oder Vorrichtungsüberholung zu ermitteln und das Erreichen dieses Zeitpunkts beispielsweise an der Vorrichtung z.B. akustisch oder optisch anzuzeigen. Selbstverständlich können die Umfeldparameter und/oder ihre Auswertung und Interpretation vom Rechner- und Speichermodul über die greifvorrichtungseigene Datenschnittstelle, bzw. deren Dateninterface, zurück an die speicherprogrammierbare Steuerung der Maschine bzw. Anlage übermittelt werden.

Um die in die Werkzeugmaschine eingebaute Greifvorrichtung auf einfache Weise schnell austauschen zu können, ist das metallische Gehäuse der Greifvorrichtung mit üblichen Zentriermitteln - zur Darstellung eines sogenannten Nullpunktspannsystems - ausgestattet. Dazu befinden sich beispielsweise im Boden oder in einer der Seitenwandungen des Gehäuses zwei weit auseinanderliegende Passstifte, die beim Einbau der Greifvorrichtung in entsprechende Passbohrungen an der Werkzeugmaschine einsteckbar sind. Die geometrischen Orte der Passstifte bzw. der Passbohrungen sind zumindest innerhalb einer Greifer-Serie eng toleriert. Die maximal zulässigen Lageabweichungen liegen, bei der Größe der im Ausführungsbeispiel beschriebenen Variante, bei 0,1 mm. Die Passstifte können auch durch Passschrauben ersetzt werden, wodurch zwei Bohrungen und Passstifte entfallen.

Alternativ werden an der Werkzeugmaschine oder einem greifertragenden Handhabungsgerät an der Stelle, an der die Greifvorrichtung zu befestigen ist, eine Schnellwechselbasis dauerhaft befestigt. Die Schnellwechselbasis ist beispielsweise eine flache Wanne, die bereichsweise einen überstehenden Rand mit tolerierter Innenwandung aufweist. In die wannenförmige Vertiefung der Schnellwechselbasis wird die Greifvorrichtung eingesetzt und dort mittels mindestens eines Schnellspannverschlusses befestigt.

Weitere Einzelheiten der Erfindung ergeben sich aus den Unteransprüchen und der nachfolgenden Beschreibung schematisch dargestellter Ausführungsformen.
- Figur 1:: Perspektivische Ansicht einer Greifvorrichtung;
- Figur 2:: Perspektivische Ansicht der um 180° geschwenkten Greifvorrichtung ohne Gehäuse und Greifarme;
- Figur 3:: Übersicht über die Hard- und/oder Softwarebaugruppen eines universellen Servoantriebs aus dem Stand der Technik;
- Figur 4:: Übersicht über die Hard- und/oder Softwarebaugruppen eines individuellen Servoantriebs mit einem in der Greifvorrichtung untergebrachten individuellen Servoregler;
- Figur 5:: Pneumatikschaltplan für einen elektronisch steuerbaren Antrieb;
- Figur 6:: Übersicht über die Hard- und/oder Softwarebaugruppen eines pneumatischen Antriebs mit einem in der Greifvorrichtung untergebrachten individuellen Regler.

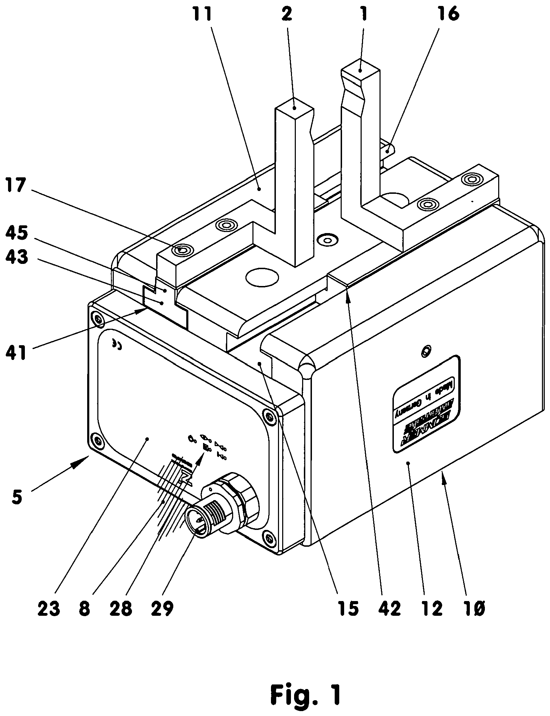

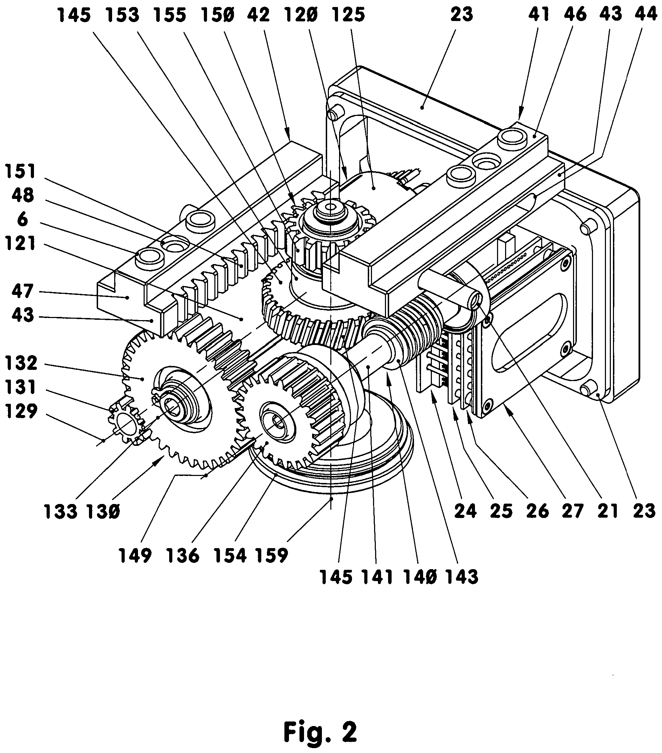

Die Figuren 1 und 2 zeigen einen elektromotorisch angetriebenen Parallelgreifer mit zwei für das Aufnehmen von Greifelementen (1, 2) ausgestatteten Schlitten (41, 42). Die Schlitten (41, 42) und der Antrieb (120), also der Motor (121), die Getriebe (130, 140, 150) und Teile der Steuerung (24 - 27), sind in einem Grundkörper oder Gehäuse (10) gelagert.

Der Grundkörper (10) ist ein quaderförmiger, beispielsweise aus einer Aluminiumlegierung hergestellter Gegenstand. Die Abmessungen des Grundkörpers (10) betragen beim Ausführungsbeispiel in Millimetern: 121 x 90 x 73. Der Grundkörper (10) weist an seiner Oberseite (11) zwei t-nutenförmige Führungsnuten (15, 16) auf. Diese Führungsnuten (15, 16) verlaufen parallel zu den längeren Körperkanten des Gehäuses (10). Ihr Abstand von Führungsnutmitte zu Führungsnutmitte beträgt z.B. 38 mm. Die Führungsflächen der Führungsnuten (15, 16) sind hardcoatiert, d.h. das Gehäuse (10) wird zumindest im Bereich der Führungsnuten (15, 16) z.B. galvanisch mit einer keramik-ähnlichen Aluminiumoxidschicht überzogen.

In den Führungsnuten (15, 16) des Gehäuses (10) sind zwei Schlitten (41, 42) geführt. Beide Schlitten (41, 42) bestehen aus einem unteren Antriebsabschnitt (43) und einem oberen Schlittensteg (45). Der breitere, untere Antriebsabschnitt (43) hat jeweils seitlich ein Zahnstangenprofil (151). Auf der dem Zahnstangenprofil (151) abgewandten Seite hat der Antriebsabschnitt (43) eine Anschlagsnut (44), die jeweils kurz vor dem Schlittenende, einen Anschlag bildend, endet. Ein in die jeweilige Anschlagsnut (44) eingreifender Anschlagsstift (21) ist in oder am Gehäuse (10) befestigt.

Der Schlittensteg (45) steht bei beiden Schlitten (41, 42) z.B. 0,4 Millimeter über die Gehäuseoberseite (11) über. An der Schlittenoberseite (46), vgl. Figur 1, trägt jeder Schlitten (41, 42) beispielsweise an den den jeweiligen äußeren Stirnseiten (47) zugewandten Enden zwei Zentrierhülsen (6) und drei Befestigungsbohrungen (48). Die Befestigungsbohrungen (48) haben unterhalb der zylindersenkungen jeweils ein Innengewinde. Auf den Zentrierhülsen (6) wird hier pro Schlitten (41, 42) ein Greifarm (1, 2) aufgesetzt. Die Greifarme (1, 2) sind jeweils über zwei Schrauben (17) in den entsprechenden Befestigungsbohrungen (48) verankert.

An den Stirnseiten des einteiligen Gehäuses (10) befinden sich je eine größere Einfräsung, die nach den Figuren 1 und 2 hinten durch einen separaten - hier nicht dargestellten - Deckel und vorn durch ein die Elektronik (24 - 27) aufnehmendes Elektronikgehäuse (23) verschließbar ist. Das Elektronikgehäuse (23) und der Deckel sind jeweils über vier Senkschrauben am Gehäuse (10) befestigt. Das Elektronikgehäuse (23) trägt eine mehrpolige Anschlussbuchse (29). Ggf. wird bei kleineren Greifvorrichtungen die Anschlussbuchse (29) durch ein durch eine PG-Verschraubung hindurch geführtes Kabel ersetzt, das an seinem freien Ende einen Stecker oder eine Buchse aufweist.

Nach Figur 2 ist im Grundkörper (10) unterhalb der Führungsnuten (15, 16) ein Elektromotor (121) mit einem angebauten Drehgeber (125) gelagert. Der Elektromotor (121) ist z.B. ein bürstenloser DC-Servomotor mit wälzgelagertem Rotor. Im Ausführungsbeispiel beträgt sein Nenndrehmoment 72 mNm. Seine Nenndrehzahl liegt bei ca. 4900 U/min, seine Nennleistung bei 62 W. Der am hinteren Wellenende angeordnete Drehgeber ist ein Resolver. Letzterer verfügt z.B. über einen diametral magnetisierten zweipoligen Gebermagneten, der auf der Welle des Elektromotors (121) befestigt ist. In axialer Richtung hinter dem Gebermagnet ist ein Winkelsensor zur Erfassung der Motorwellenposition angeordnet. Der Winkelsensor umfasst eine Elektronik mit mehreren Hallsensoren, mit mindestens einem Interpolator und mit mehreren Treiberstufen. Das von den Hallsensoren wahrgenommene winkelabhängige analoge Magnetfeldsignal wird verstärkt und interpoliert, so dass eine absolute Winkelinformation entsteht, deren Auflösung bei ca. 5,27 Winkelminuten liegt.

Der Elektromotor (121) wirkt über ein z.B. einstufiges Rädergetriebe (130), dessen Stirnräder beispielsweise geradverzahnt sind, auf ein Schneckengetriebe (140). Die Schnecke (143) der Schneckenwelle (141) kämmt mit einem auf der Synchronhohlwelle (153) angeordneten Schneckenrad (145). Auf der Synchronhohlwelle (153) ist ein z.B. geradverzahntes Synchronrad (155) angeordnet, das mit den Zahnstangenprofilen (151) der Schlitten (41, 42) kämmt.

Im Detail ist auf der Abtriebswelle des Elektromotors (121) ein z.B. 10-zahniges Ritzelrad (131) angeordnet. Die Mittellinie (129) des Elektromotors (121) ist zu den Führungsnuten (15, 16) parallel orientiert. Das Ritzelrad (131) kämmt mit einem z.B. 36-zahnigen Zwischenrad (132). Letzteres treibt ein 24-zahniges Abtriebsrad (136) an, das auf der Schneckenwelle (141) des Schneckengetriebes (140) angeordnet ist. Die Schnecke (143) kämmt mit dem auf der Synchronhohlwelle (153) angeordneten 35-zahnigen Schneckenrad (145).

Die zylindrische Schnecke (143) ist beispielsweise eingängig ausgeführt. Die Schnecke (143) und das Schneckenrad (145) haben sich senkrecht kreuzende Mittellinien (149) und (159). Das Schneckenrad (145) hat im Ausführungsbeispiel eine reine Schrägverzahnung, deren Schrägungswinkel dem Mittensteigungswinkel der Zylinderschnecke (143) entspricht. Wegen der reinen Schrägverzahnung wird das Schneckenrad (145) als unechtes Schneckenrad bezeichnet. Die Zahnflanken der Radpaarung haben im Gegensatz zu regulären Schneckenradsätzen nur eine Punktberührung. Die vorhandene Längsgleitbewegung der Zahnflanken erfordert hier verschleißfeste Werkstoffe oder gehärtete Zahnräder. Im Ausführungsbeispiel sind daher die Schnecke (143) und das Schneckenrad (145) jeweils aus einem Nitrierstahl 34CrAlNi7-10 gefertigt und entsprechend oberflächengehärtet.

Bei dem unechten Schneckenrad (145) muss bei seinem Einbau in das Gehäuse (10) die Mittellinie der Schnecke (143) nicht in der Mittelebene der Schneckenradverzahnung liegen. Die Höhenlage darf gegenüber der Mittellinie (149) der Schnecke (143) im Millimeterbereich abweichen. Beidseits der Schnecke (143) sind die Lager der Schneckenwelle (141) erkennbar.

Die im Grundkörper (10) vertikal orientierte Synchronhohlwelle (153) trägt oberhalb des Schneckenrades (145) das 16-zahnige Synchronrad (155), das im Ausführungsbeispiel mit den beiden Zahnstangenprofilen (151) der Schlitten (41, 42) kämmt. Die Synchronhohlwelle (153) sitzt wälzgelagert auf einer gehäusefesten Synchronwellenachse (154).

Nach Figur 2 befinden sich im rechten Bereich des nach innen offenen, deckelartigen Elektronikgehäuses (23) einige bestückte Platinen (24 - 27). Das Elektronikgehäuse (23), das z.B. 11 mm aus dem Gehäuse (10) herausragt, hat die Form einer Wanne und ist aus einem elektrisch isolierenden, schlagfesten Kunststoff hergestellt. Der Wannenrand liegt abdichtend am Gehäuse (10) an. Am Wannenboden sind die Platinen (24 - 27) so befestigt, dass sie weit in den Innenraum des Gehäuses (10) hineinragen. Der jeweils hineinragende Platinenabschnitt hat beim Ausführungsbeispiel eine Länge, die größer ist als 25% der Länge des Gehäuses (10). Die Platinen (24 - 27) sind parallel zur vertikalen Mittenlängsebene (8) des Gehäuses (10) orientiert.

Die Platine (24) umfasst das Rechner- und Speichermodul (87). Diese Platine weist zudem einen abgewinkelten Platinenschenkel auf, der sich entlang der großen Wandung des Elektronikgehäuses erstreckt. Der abgewinkelte Platinenschenkel trägt neben einer Datenschnittstelle (86) auch einige in die Wandung des Elektronikgehäuse (23), von außen sichtbar, eingesteckte Leuchtdioden (28) zur optischen Darstellung des Betriebszustandes der Greifvorrichtung.

Auf der Platine (25) ist der Servoregler untergebracht. Er besteht u.a. aus der Servoregler-CPU und weiteren Bausteinen, die die Motorsignale für die Kaskadenreglersoftware aufbereiten. Die Platine (27) trägt die Leistungsendstufe, deren Ansteuerungselektronik auf der davor angeordneten Platine (26) aufgebaut ist.

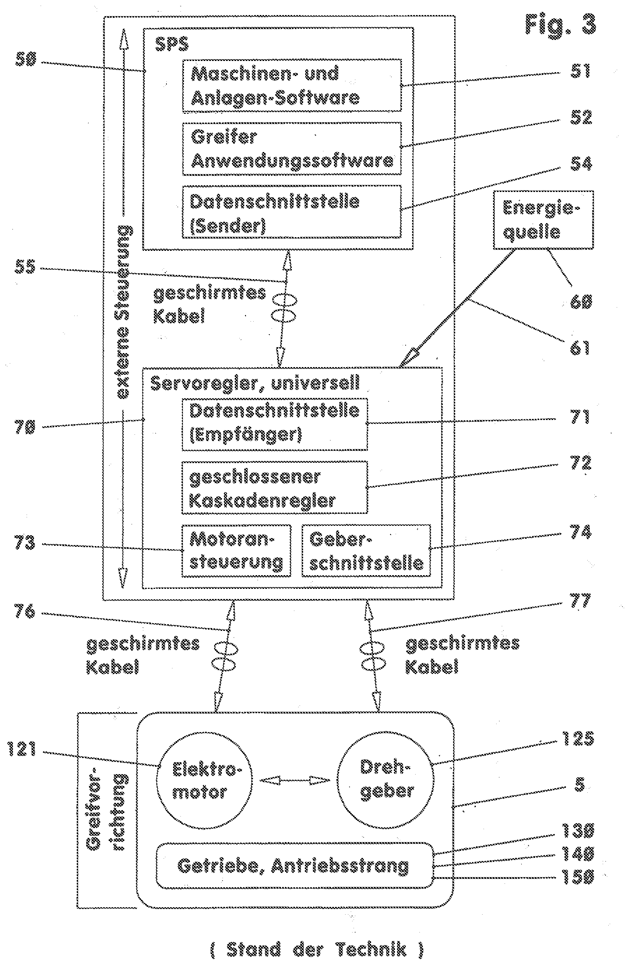

Figur 3 zeigt - als Stand der Technik - in einem ersten Schnittstellenlageplan eine konventionelle Ansteuerung einer üblichen Greifvorrichtung. Die Ansteuerung verfügt über zwei separate Hauptbaugruppen (50, 70), die z.B. im Schaltschrank der Werkzeugmaschine untergebracht sind. Sie werden unter dem Begriff "externe Steuerung" zusammengefasst. Die erste Hauptbaugruppe ist eine speicherprogrammierbare Steuerung (50) mit z.B. drei SPS-Funktionsbaugruppen (51, 52, 54).

Die erste SPS-Funktionsbaugruppe (51) ist die Software für die Maschinen- und/oder Anlage. Die SPS (50) erzeugt hier Steuersignale durch interne Mikroprozessoren abhängig von einer internen Software, die im steuerungseigenen Programmspeicher abgelegt ist.

Die zweite SPS-Funktionsbaugruppe (52) ist eine speziell zugeschnittene Anwendungssoftware für die anzusteuernde Greifvorrichtung. Hier wird ein spezielles Programm für die Anpassung an die greifereigene Steuerungsaufgabe benutzt, um die Greifvorrichtung nachzubilden. Die Nachbildung ist nur in den Grenzen der SPS (50) möglich. Dabei kann die Steuerungshardware der SPS (50) nicht geändert werden.

Die dritte SPS-Funktionsbaugruppe (54) bildet eine SPS-eigene Datenschnittstelle, die mit der zweiten Hauptbaugruppe (70) kommuniziert. Da die SPS (50) bei der Prozessführung eine Vielzahl verschiedener Sensoren und Stellglieder bedienen können muss, wird zur Kommunikation ein Feldbussystem verwendet. Auf dem Feldbus werden alle zu übermittelnden Nachrichten als digitale Telegramme oder Protokolle aufgegeben und den gewünschten Empfängern über deren Adressen zugeleitet. Als Feldbussystem wird beispielsweise der Profibus, der Profi-Net-Bus, der Interbus-S oder der CAN-Bus verwendet. Diese Bussysteme erfordern für die Kommunikation speziell geschirmte Kabel (55).

Die zweite Hauptbaugruppe (70) stellt einen universellen Servoregler dar. Er hat beispielsweise vier Reglerfunktionseinheiten (71 - 74). Die erste Reglerfunktionseinheit (71) ist die Empfängerseite der reglereigenen Datenschnittstelle. Sie steht über ein geschirmtes Kabel (55) mit der dritten SPS-Funktionsbaugruppe (54) in Verbindung. Zudem wird die zweite Hauptbaugruppe (70) über ein Energiekabel (61) von einer Energiequelle (60) versorgt.

Die zweite Reglerfunktionseinheit (72) bildet ein programmierter, geschlossener Kaskadenregler. Er umfasst u.a. mindestens eine Lage-Regelung, eine Geschwindigkeitsregelung und eine Stromregelung. Meist ist der Lageregelkreis mit einem unterlagerten Geschwindigkeitsregelkreis ausgestattet. Der Kaskadenregler ist u.a. auch zuständig für den Verlauf der positiven und negativen Beschleunigungsrampen des in der Greifvorrichtung verwendeten Elektromotors (121).

Die dritte Reglerfunktionseinheit (73) ist die Ansteuerung des Elektromotors (121). Sie enthält u.a. eine Leistungsendstufe und deren Ansteuerungselektronik.

Die vierte Reglerfunktionseinheit (74) stellt die Geberschnittstelle (74) für die Kommunikation mit dem motorseitigen Drehgeber (125) dar.

Die Funktionsbaugruppen (51, 52, 54) stehen über die Reglerfunktionseinheiten (71 - 74) als externe Steuerung mit der Greifvorrichtung (5) über z.B. zwei geschirmte Kabel (76, 77) in Verbindung.

Die Greifvorrichtung (5) umfasst u.a. als elektrische und/oder elektronische Baugruppen mindestens einen Servomotor (121) und pro Servomotor zumindest einen Sensor (125) zur Winkellageerfassung der Motorwelle.

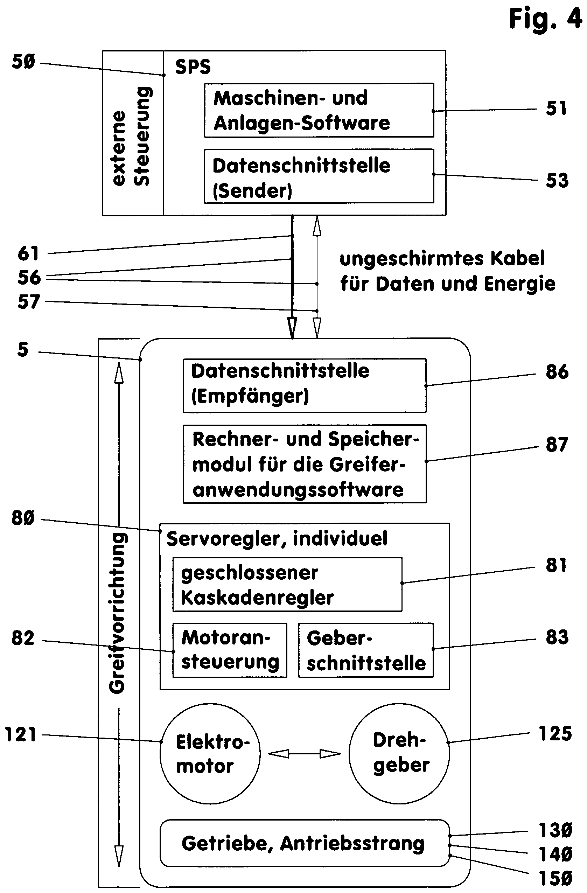

Die Figur 4 stellt in einem zweiten Schnittstellenlageplan u.a. eine gegenüber Figur 3 geänderte Schnittstellenanordnung dar. Hier enthält die externe Steuerung nur noch die SPS (50) - als erste Hauptbaugruppe - mit einer ersten (51) und zweiten SPS-Funktionsbaugruppe (53). Letztere ist eine Schnittstelle für eine Punkt-zu-Punkt-Kommunikation. Eine solche Kommunikation ist z.B. mittels des IO-Link^{®}-Systems realisierbar. Das System kommt z.B. mit einer einfachen, ungeschirmten Zweidrahtverbindung (57) aus.

Die Zweidrahtverbindung (57) wird mit dem Energiekabel (61) zu einem ungeschirmten Kabel (56) zusammengefasst. Das Kabel (57) ist die einzige Verbindung zwischen der SPS (50) und dem Gehäuse (10, 23) der Greifvorrichtung (5). Hier liegt also eine einfache, flexible und leicht zu handhabende Einkabelverbindung vor.

Das Kabel (57) ist in der Greifvorrichtung (5) mit der dort angeordneten Punkt-zu-Punkt-Datenschnittstelle (86) verbunden. Neben der Datenschnittstelle (86) befindet sich in der Greifvorrichtung (5) ein Rechner- und Speichermodul (87), das die gesamte Greiferanwendungssoftware umfasst. In diesem Modul werden alle für das Greifen der Werkstücke mittels dieser Greifvorrichtung (5) erforderlichen Parameter hinterlegt.

Diese Parameter sind neben den für das Greifen notwendigen Geometriedaten u.a. Werkstoffeigenschaften, die z.B. eine Funktion des E-Moduls oder einer ausgehöhlten Geometrieform sind. Beispielsweise kann bei elastischen Vollkörpern, je nach Greifgutwerkstoff, die Härte nach Shore A , B, C oder D angegeben werden, um den elastizitätsbedingten Greifhubzuschlag als geometrische Länge, in Verbindung mit der zwischen den Greifarmen (1, 2) gelegenen Einspannweite bzw. Einspannlänge, zu berechnen. Bei ausgehöhlten Geometrieformen, wie z.B. Schraubenfedern oder Kunststoffbehälter, kann die verformungsbedingte Federrate an die Stelle der Shore-Härte treten.

Mit dem Servomotor (121) und dem Drehgeber (125) steht in der Greifvorrichtung (5) ein Servoregler (80) in Verbindung, der speziell auf die Kombination aus Greiferkinematik, Servomotor und Drehgeber abgestimmt ist.

Der individuelle Servoregler (80) hat als erste Reglerfunktionseinheit einen Kaskadenregler (81), der beispielsweise mit einem Lageregelkreis ohne Geschwindigkeitsregler auskommt, da aus der vom Drehgeber (125) gelieferten Winkellageänderung und der Laufzeitinformation die Drehzahl bzw. die Hubgeschwindigkeit der Greifarme berechnet wird. Für Letztere werden u.a. die Übersetzungen der Getriebe (130, 140, 150) herangezogen.

Die zweite Reglerfunktionseinheit (82) des individuellen Servoreglers (80) ist an die Leistung und Dynamik des Servomotors (121) angepasst. Die dritte Reglerfunktionseinheit (83), die Geberschnittstelle, ist direkt auf die verwendete Weg- oder Drehgeberart zugeschnitten. Bauteile, die einen universellen Zugriff auf andere Geberbauarten, wie z.B. Tachogeneratoren, Spulenresolver, optische Messsysteme und dergleichen, erlauben, werden weggelassen. Das spart Platinenbauraum und Energie ein.

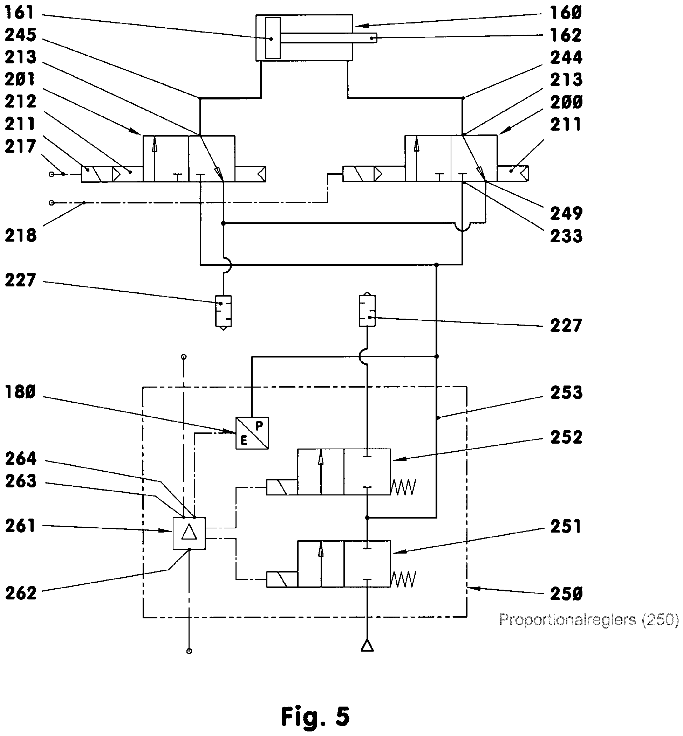

Die Figur 5 zeigt einen Pneumatikschaltplan für eine Greifvorrichtung (505), deren Antrieb bzw. Aktor eine mit Druckluft oder Hydrauliköl betriebene Zylinder-Kolben-Einheit (160) ist. Letztere hat einen doppeltwirkenden Zylinder.

Um die Zylinder-Kolben-Einheit (160) z.B. pneumatisch anzusteuern, sind ihr zwei 3/2-Wegeventile (200, 201) vorgeschaltet. Die beiden z.B. baugleichen Wegeventile (200, 201), jeweils mit Sperr-Ruhestellung, sind z.B. beidseitig pneumatisch vorgesteuert (211) und durchflussseitig durch einen Elektromagnet (212) oder einen elektromechanischen Antrieb betätigbar.

An den Arbeitsanschlüssen (213) der 3/2-Wegeventile startet je eine zum Zylinder der Zylinder-Kolben-Einheit (12) führende Leitung (244, 245). Die Leitung (244) ist für den Greifhub zuständig, während die Leitung (245) den Zylinder zum Freigeben des Werkstücks mit Druckluft versorgt.

Nach Figur 5 sind die beiden wegeventilseitigen Hauptzuläufe (233) am Ausgang eines Proportionalreglers (250) angeschlossen, das wiederum über den gehäuseseitigen Druckluftanschluss versorgt wird. Die Ventilentlüftungsbohrungen (249) der Wegeventile (200, 201) führen z.B. über gehäuseinterne Bohrungen zu einem am Gehäuse (10) angeordneten Entlüftungs-filter (227).

Sind die 3/2-Wegeventile (200, 201) mit Elektromagneten (212) ausgestattet, so werden diese vom Rechner- und Speichermodul (170) über die Steuerleitungen (217) oder (218) elektrisch angesteuert.

Der im Gehäuse (10) eingebaute Miniaturproportionalregler (250) verfügt über zwei elektromagnetisch ansteuerbare 2/2-Wegeventile (251, 252), über die die Druckluft eines externen Druckluftanschlusses geregelt den Hauptzuläufen (233) der 3/2-Wegeventile (200, 201) zur Verfügung gestellt wird.

Das erste 2/2-Wegeventil (251) führt in Offenstellung über seinen Arbeitsanschluss den Hauptzuläufen (233) die Druckluft über die Leitung (253) zu. Das zweite 2/2-Wegeventil (252) entlüftet die Leitung (253) über den an seinem Arbeitsanschluss angeschlossenen Geräuschdämpfer (227). An der Leitung (253) ist die pneumatische Seite eines Drucksensors (180) angeschlossen. Im Drucksensor wird der anstehende Druck in ein elektrisches Signal gewandelt, das den Druck der Leitung (253) repräsentiert. Das Signal wird einem Verstärker (261) zugeführt und mit dem am Drucksensor (180) anstehenden Druck verglichen. Ist der gemessene Druck zu niedrig, steuert der Verstärker (261) seinen zum ersten 2/2-Wegeventil (251) führenden Ausgang auf, um das Ventil (251) zu öffnen.

Gemäß Figur 5 befinden sich die 2/2-Wegeventile (251, 252) in der Sperr-Ruhestellung. Dies ist immer dann der Fall, wenn sich der Kolben (161) der Zylinder-Kolben-Einheit (160) im Bereich einer Endlage befindet.

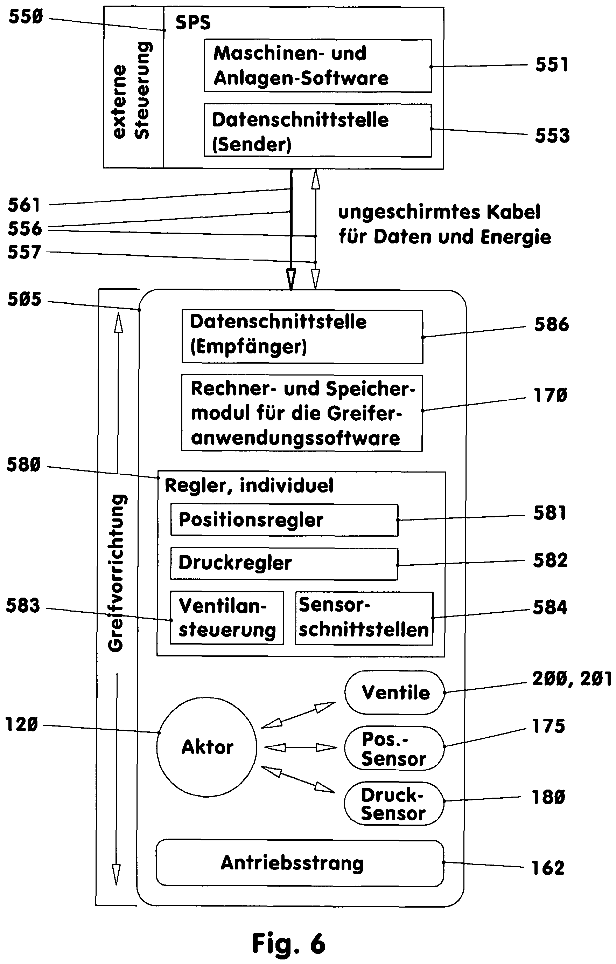

Figur 6 zeigt einen Schnittstellenlageplan der Ansteuerung einer pneumatischen Greifvorrichtung (505) gemäß des Schaltplanes aus Figur 5. Die Greifvorrichtung umfasst neben einer elektronischen Steuerung (170) u.a. als elektrische und/oder elektronische Baugruppen mindestens zwei Wegeventile (200, 201), pro Zylinder-Kolben-Einheit (160) zumindest einen Positionssensor (175) und mindestens einen elektrische Signale liefernden Drucksensor (180).

Die Ansteuerung verfügt über eine erste Hauptbaugruppe (550), die z.B. im Schaltschrank der Werkzeugmaschine untergebracht ist. Sie wird als "externe Steuerung" bezeichnet. Diese Hauptbaugruppe ist eine speicherprogrammierbare Steuerung (550) mit z.B. zwei SPS-Funktionsbaugruppen (551) und (553).

Die erste SPS-Funktionsbaugruppe (551) ist die Software für die Maschinen- und/oder Anlage. Die SPS erzeugt hier Steuersignale durch interne Mikroprozessoren abhängig von einer internen Software, die im steuerungseigenen Programmspeicher abgelegt ist.

Die zweite SPS-Funktionsbaugruppe (553) bildet eine SPS-eigene Datenschnittstelle, die mit der zweiten Hauptbaugruppe (580), der Eletronik der Greifvorrichtung (505), kommuniziert. Sie ist eine Schnittstelle für eine Punkt-zu-Punkt-Kommunikation. Ein solcher Informationsaustausch ist z.B. mittels des IO-Link^{®}-Systems realisierbar. Das System kommt z.B. mit einer einfachen, ungeschirmten Drei- bis Fünfdrahtverbindung (557) aus.

Die Mehrdrahtverbindung (557) wird mit dem Energiekabel (561) zu einem ungeschirmten Kabel (556) zusammengefasst, das dann z.B. von fünf Adern zwei aufweist, die der Energieversorgung dienen. Das Kabel (556) ist die einzige Verbindung zwischen der SPS (550) und dem Gehäuse der Greifvorrichtung (505). Hier liegt also eine einfache, flexible und leicht zu handhabende Einkabelverbindung vor.

Das Kabel (557) ist in der Greifvorrichtung (505) mit der dort angeordneten Punkt-zu-Punkt-Datenschnittstelle (586) verbunden. Neben der Datenschnittstelle (586) befindet sich in der Greifvorrichtung ein Rechner- und Speichermodul (170), das die gesamte Greiferanwendungssoftware umfasst. In diesem Modul werden alle für das Greifen der Werkstücke mittels dieser Greifvorrichtung (505) erforderlichen Parameter hinterlegt.

Diese Parameter sind neben den für das Greifen notwendigen Geometriedaten u.a. Werkstoffeigenschaften, die z.B. eine Funktion des E-Moduls oder einer ausgehöhlten Geometrieform sind. Beispielsweise kann bei elastischen Vollkörpern, je nach Greifgutwerkstoff, die Härte nach Shore A, B, C oder D angegeben werden, um den elastizitätsbedingten Greifhubzuschlag als geometrische Länge, in Verbindung mit der zwischen den Greifarmen (1, 2) gelegenen Einspannweite bzw. Einspannlänge, zu berechnen. Bei ausgehöhlten Geometrieformen, wie z.B. Schraubenfedern oder Kunststoffbehältern, kann die verformungsbedingte Federrate an die Stelle der Shore-Härte treten. Alternativ ist es auch möglich, der Greifvorrichtung (505) für das jeweilige Werkstück nur einen Greifkraftbereich vorzugeben.

Mit dem ansteuerbaren Aktor (160), z.B. einer Zylinder-Kolben-Einheit, und dem Positionssensor (175) steht in der Greifvorrichtung ein individuell aufgebauter Regler (580) in Verbindung, der speziell auf die Kombination aus Greiferkinematik, Aktoransteuerung und Sensor, z.B. einem Positionsgeber, abgestimmt ist.

Der individuelle Regler (580) hat als Reglerfunktionseinheit mindestens einen Positionsregler (581), der beispielsweise mit einem Lageregelkreis auskommt, da aus der von dem oder den Positionssensoren (175) gelieferten Lageänderung und der Laufzeitinformation die Hubgeschwindigkeit der Greifarme berechnet wird.

Eine zweite Reglerfunktionseinheit stellt einen Druckregler (582) dar, der mit Hilfe der Drucksensoren z.B. die Höhe des Speisedrucks und die Hubrichtung der Greifarme (1, 2) während der Laufzeit ermittelt.

Die dritte Reglerfunktionseinheit ist die Sensorschnittstelle (583) des individuellen Reglers (580). Sie ist an die Leistung und Dynamik des Aktors (160) angepasst und direkt auf mindestens einen Positionsgeber (175) und z.B. je einen Drucksensor (180) pro Hubrichtung des Aktors (160) zugeschnitten. Mit Hilfe der an oder in der Greifvorrichtung verbauten Sensoren (175, 180), einschließlich des Zeitgebers, kann neben dem Messen der Greifposition und dem anstehenden Druckmitteldruck zudem die Greifzeit gemessen werden. Ferner können statistische Werte, wie z.B. Anzahl der Greifvorgänge oder Höhe der Greifkräfte, gesammelt werden. Ggf. kann auch eine Frühwarnung für baldigen Funktionsverlust generiert werden. Derartige Informationen werden entweder an die SPS (550) weitergeleitet oder an der Greifvorrichtung (505) z.B. über LED's oder ein Display angezeigt.

### Bezugszeichenliste:

- 1, 2: Greifarme, Greifbacken
- 5: Greifvorrichtung
- 6: Zentrierhülsen
- 8: vertikale Mittanlängsebene
- 10: Grundkörper, Gehäuse

- 11: Oberseite, Gehäuseoberseite
- 12: Gehäuseseite, groß
- 15, 16: Führungsnuten
- 17: Schrauben zwischen (41, 42) und (1, 2)
- 21: Anschlagsstift
- 23: Elektronikgehäuse, Anbaugehäuse
- 24: Platine mit Rechner- und Speichermodul, Elektroi-iik
- 25: Platine mit Servoregler, Elektronik
- 26: Platine mit Ansteuerelektronik, Elektronik
- 27: Platine mit Leistungsendstufe, Elektronik
- 28: Leuchtdioden
- 29: Anschlussbuchse

- 41, 42: Schlitten, Bauteile
- 43: Antriebsabschnitt
- 44: Anschlagsnut
- 45: Schlittensteg
- 46: Oberseite, Schlittenoberseite
- 47: Stirnseite, außen
- 48: Befestigungsbohrungen
- 50: erste Hauptbaugruppe, externe Steuerung, speicherprogrammierbare Steuerung = SPS
- 51: erste SPS-Funktionsbaugruppe, Maschinensoftware
- 52: zweite SPS-Funktionsbaugruppe, Anwendungssoftware, universell
- 53: zweite SPS-Funktionsbaugruppe, Datenschnittstelle für Punkt-zu-Punkt-Kommunikation
- 54: dritte SPS-Funktionsbaugruppe, Datenschnittstelle für Feldbus
- 55: geschirmtes Kabel zwischen (50) und (70)
- 56: ungeschirmtes Kabel für Daten und Energie zwischen (50) und (5)
- 57: ungeschirmtes Kabel, Zweidrahtverbindung in (56)

- 60: Energiequelle
- 61: Energiekabel

- 70: zweite Hauptbaugruppe, Servoregler, universell
- 71: erste Reglerfunktionseinheit, Datenschnittstelle
- 72: zweite Reglerfunktionseinheit, Kaskadenregler
- 73: dritte Reglerfunktionseinheit, Motoransteuerung
- 74: vierte Reglerfunktionseinheit, Geberschnittstelle
- 76: geschirmtes Kabel zwischen (73) und (121)
- 77: geschirmtes Kabel zwischen (74) und (125)

- 80: zweite Hauptbaugruppe, Servoregler, individuell
- 81: erste Reglerfunktionseinheit, Kaskadenregler
- 82: zweite Reglerfunktionseinheit, Motoransteuerung
- 83: dritte Reglerfunktionseinheit, Geberschnittstelle
- 86: Datenschnittstelle für Punkt-zu-Punkt-Kommunikation
- 87: Rechner- und Speichermodul für die Greiferanwendungssoftware
- 120: Antrieb, elektrisch
- 121: Motor, Elektromotor, Servomotor, Stellglied
- 125: Drehgeber, Sensor
- 129: Mittellinie

- 130: Rädergetriebe, einstufig
- 131: Ritzelrad
- 132: Zwischenrad
- 133: Mittellinie von (132)
- 136: Abtriebsrad, Getriebeausgang

- 140: Schneckengetriebe
- 141: Schneckenwelle
- 143: Schnecke, Zylinderschnecke
- 145: Schneckenrad
- 149: Mittellinie

- 150: Zahnstangengetriebe
- 151: Zahnstangenprofil
- 153: Synchronhohlwelle
- 154: Synchronwellenachse
- 155: Synchronrad
- 159: Mittellinie

- 160: Zylinder-Kolben-Einheit; Antrieb, Aktor pneumatisch, doppeltwirkend
- 161: Kolben, oval
- 162: Kolbenstange, Antriebsstrang
- 170: Rechner- und Speichermodul für die Greiferanwendungssoftware, elektronische Steuerung
- 175: Positionsgeber, analog; Kolbenpositionssensor

- 180: Drucksensor mit elektrischem Signalausgang

- 200, 201: Wegeventile, 3/2-Wegeventile
- 211: pneumatische Vorsteuerung, beidseitig
- 212: Elektromagnet, Hubmagnet
- 213: Arbeitsanschlüsse an (200, 201)
- 217, 218: Steuerleitung, elektrisch

- 227: Geräuschdämpfer, Entlüftungsfilter

- 233: Hauptzulauf an (200, 201)

- 240: Druckbegrenzungsventil
- 244, 245: Druckluftanschluss, Druckmittelanschluss
- 249: Ventilentlüftungsbohrung für (200, 201)

- 250: Proportionalregler, Miniaturproportionalregler
- 251: 2/2-Wegeventile, Zulauf
- 252: 2/2-Wegeventile, Rücklauf
- 253: Leitung
- 261: Verstärker
- 262: Eingang des Referenzdrucks
- 263: Ausgang des Istdrucks
- 264: Eingang des Istdrucks
- 505: Greifvorrichtung, Parallelgreifer; pneumatisch
- 550: erste Hauptbaugruppe, externe Steuerung, speicherprogrammierbare Steuerung = SPS
- 551: erste SPS-Funktionsbaugruppe, Maschinensoftware
- 553: zweite SPS-Funktionsbaugruppe, Datenschnittstelle für Punkt-zu-Punkt-Kommunikation
- 556: ungeschirmtes Kabel für Daten und Energie zwischen (550) und (505)
- 557: Drei- bis Fünfdrahtverbindung, Mehrärahtverbindung, ungeschirmt
- 561: Energiekabel

- 580: zweite Hauptbaugruppe, Regler, individuell
- 581: erste Reglerfunktionseinheit, Positionsregler
- 582: zweite Reglerfunktionseinheit, Druckregler
- 583: dritte Reglerfunktionseinheit, Ventilansteuerung
- 584: Sensorschnittstellen
- 586: Datenschnittstelle für Punkt-zu-Punkt-Kommunikation

## Patentansprüche

1. Greifvorrichtung zum mechanischen Greifen von Werkstücken mittels bewegbarer Greifarme (1, 2), umfassend:
- ein Gehäuse (10, 23),
- bewegbare Greifarme (1, 2) und
- einen in einem Gehäuse (10, 23) untergebrachten pneumatischen oder hydraulischen Antrieb (120, 160), der die bewegbaren Greifarme (1,2) antreibt,
**dadurch gekennzeichnet,**
- **dass** das Gehäuse des pneumatischen oder hydraulischen Antriebs (120, 160) mindestens einen Positionssensor (175) und mindestens einen Drucksensor (180) aufweist und
- **dass** im oder direkt am Gehäuse (10, 23) der Greifvorrichtung (5, 505)
- erstens eine Datenschnittstelle (86, 586) für eine Punkt-zu-Punkt-Kommunikation mit einer externen speicherprogrammierbaren Steuerung (50, 550) angeordnet ist,
- zweitens mindestens ein Rechner- und Speichermodul (87, 170) angeordnet ist, das die Anwendungssoftware der Greifvorrichtung (5, 505) umfasst und
- drittens ein Regler (580) angeordnet ist, der mindestens einen Positionsregler (581), mindestens einen Druckregler (582), die Ansteuerung des pneumatischen oder hydraulischen Antriebs (160) und Schnittstellen (584) für Drucksensoren (180) und/oder mindestens ein Weg- oder Positionsmesssystem (175) aufweist.

2. Greifvorrichtung gemäß Anspruch 1, **dadurch gekennzeichnet, dass** der pneumatische oder hydraulische Antrieb (160) eine Zylinder-Kolben-Einheit ist.

3. Greifvorrichtung gemäß Anspruch 1, **dadurch gekennzeichnet, dass** die Datenschnittstelle (86) und das Rechner- und Speichermodul (87) auf mindestens einer Platine (24-27) untergebracht sind.

4. Greifvorrichtung zum mechanischen Greifen von Werkstücken mittels bewegbarer Greifarme (1, 2), umfassend:
- ein Gehäuse (10, 23),
- bewegbare Greifarme (1, 2) und
- einen in einem Gehäuse (10, 23) untergebrachten elektrischen Antrieb (120, 160), der die bewegbaren Greifarme (1,2) antreibt,
- wobei bei dem elektrischen Antrieb (120) entweder der Antriebsmotor (121) einen Drehgeber (125) hat oder mindestens eines der mit den Greifarmen (1, 2) bewegten Bauteile (41, 42) ein Wegmesssystem aufweist,
- wobei im oder direkt am Gehäuse (10, 23) der Greifvorrichtung (5, 505)
- erstens eine Datenschnittstelle (86, 586) für eine Punkt-zu-Punkt-Kommunikation mit einer externen speicherprogrammierbaren Steuerung (50, 550) angeordnet ist,
- zweitens mindestens ein Rechner- und Speichermodul (87, 170) angeordnet ist, das die Anwendungssoftware der Greifvorrichtung (5, 505) umfasst und
- drittens ein Servoregler (80) angeordnet ist, der die Ansteuerung des Antriebsmotors (121) und eine Geberschnittstelle (83) für den Drehgeber (125) oder das Wegmesssystem aufweist,
**dadurch gekennzeichnet,**
- **dass** im oder am Gehäuse (10, 23) der Greifvorrichtung (5, 505) der Servoregler (80) angeordnet ist, der einen geschlossenen Kaskadenregler (81) aufweist, wobei der Kaskadenregler (81) mindestens eine Lageregelung, eine Geschwindigkeitsregelung und eine Stromregelung umfasst.

5. Greifvorrichtung gemäß Anspruch 4, **dadurch gekennzeichnet, dass** der Antriebsmotor (121) ein bürstenloser DC-Motor ist.

6. Greifvorrichtung gemäß Anspruch 4, **dadurch gekennzeichnet, dass** der Drehgeber (125) ein Resolver mit einem zweipoligen Gebermagneten und mit mehreren Hallsensoren ist.

7. Greifvorrichtung gemäß Anspruch 4, **dadurch gekennzeichnet, dass** die Datenschnittstelle (86), das Rechner- und Speichermodul (87) sowie der komplette Servoregler (80) auf mindestens einer Platine (24-27) untergebracht sind.

8. Greifvorrichtung gemäß Anspruch 3 oder 7, **dadurch gekennzeichnet, dass** die Platine oder die Platinen (24-27) an einem Deckel oder an einem Anbaugehäuse (23) befestigt sind.

9. Greifvorrichtung gemäß Anspruch 3 oder 7, **dadurch gekennzeichnet, dass** bei mehreren Platinen (24 - 27) diese gestapelt sind.

10. Greifvorrichtung gemäß Anspruch 8, **dadurch gekennzeichnet, dass** die Platine oder die Platinen (24-27) in den Bereich des Gehäuses (10) hineinragen, in dem der Antriebsmotor (121) und die Getriebe (130, 140, 150) gelagert sind.

11. Greifvorrichtung gemäß Anspruch 1 oder 4, **dadurch gekennzeichnet, dass** das Rechner- und Speichermodul (87, 170) dazu eingerichtet ist, zumindest einen Teil der von den Sensoren (125, 175, 180) erfassten physikalischen Kenngrößen in optische oder akustische Signale umzuwandeln.

## Claims

1. Gripping device for mechanically gripping workpieces by means of movable gripping arms (1, 2), comprising:
- a housing (10, 23),
- movable gripping arms (1, 2), and
- a pneumatic or hydraulic drive (120, 160) accommodated in a housing (10, 23), which drives the movable gripping arms (1, 2),
**characterized in**
- **that** the housing of the pneumatic or hydraulic drive (120, 160) has at least one position sensor (175) and at least one pressure sensor (180), and
- **that** the following are arranged in or directly on the housing (10, 23) of the gripping device (5, 505):
- first, a data interface (86, 586) for a point-to-point communication with an external programmable logic controller (50, 550),
- second, at least one computer and memory module (87, 170) comprising the application software of the gripping device (5, 505), and
- third, a controller (580) which has at least one position controller (581), at least one pressure controller (582), the control of the pneumatic or hydraulic drive (160), interfaces (584) for pressure sensors (180), and/or at least one distance or position measuring system (175).

2. Gripping device according to claim 1, **characterized in that** the pneumatic or hydraulic drive (160) is a cylinder-piston unit.

3. Gripping device according to claim 1, **characterized in that** the data interface (86) and the computer and memory module (87) are accommodated on at least one circuit board (24-27).

4. Gripping device for mechanically gripping workpieces by means of movable gripping arms (1, 2), comprising:
- a housing (10, 23),
- movable gripping arms (1, 2), and
- an electric drive (120, 160) accommodated in a housing (10, 23), which drives the movable gripping arms (1, 2),
- wherein the drive motor (121) in the electric drive (120) has a rotary encoder (125), or at least one of the components (41, 42) moved with the gripping arms (1, 2) has a distance measuring system,
- wherein the following are arranged in or directly on the housing (10, 23) of the gripping device (5, 505):
- first, a data interface (86, 586) for a point-to-point communication with an external programmable logic controller (50, 550),
- second, at least one computer and memory module (87, 170) comprising the application software of the gripping device (5, 505), and
- third, a servo controller (80), which has the control of the drive motor (121) and an encoder interface (83) for the rotary encoder (125) or the distance measuring system,
**characterized in that**
- the servo controller is arranged in or on the housing (10, 23) of the gripping device (5, 505), which servo controller (80) has a closed cascade controller (81), wherein the cascade controller (81) comprises at least one position control, a speed control and a current control.

5. Gripping device according to claim 4, **characterized in that** the drive motor (121) is a brushless DC motor.

6. Gripping device according to claim 4, **characterized in that** the rotary encoder (125) is a resolver with a two-pole encoder magnet and with multiple Hall sensors.

7. Gripping device according to claim 4, **characterized in that** the data interface (86), the computer and memory module (87), and the entire servo controller (80) are accommodated on at least one circuit board (24-27).

8. Gripping device according to claim 3 or **7, characterized in that** the circuit board or boards (24-27) are attached to a cover or to a mounting housing (23).

9. Gripping device according to claim 3 or 7, **characterized in that**, in case multiple circuit boards are present, these circuit boards (24-27) are stacked.

10. Gripping device according to claim 8, **characterized in that** the circuit board or boards (24-27) protrude into the region of the housing (10) in which the drive motor (121) and the gears (130, 140, 150) are supported.

11. Gripping device according to claim 1 or 4, **characterized in that** the computer and memory module (87, 170) is set up to convert at least some of the physical parameters detected by the sensors (125, 175, 180) into optical or acoustic signals.

## Revendications

1. Dispositif de préhension pour la préhension mécanique de pièces à usiner l'aide de bras préhenseurs (1, 2) mobiles, comprenant :
- un boîtier (10, 23),
- des bras préhenseurs mobiles (1, 2) et
- un entraînement (120, 160) pneumatique ou hydraulique logé dans le boîtier (10, 23), qui entraîne les bras préhenseurs (1, 2) mobiles,
**caractérisé**
- **en ce que** le boîtier de l'entraînement (120, 160) pneumatique ou hydraulique comporte au moins un capteur de position (175) et au moins un capteur de pression (180) et
- **en ce que** dans ou directement sur le boîtier (10, 23) du dispositif de préhension (5, 505)
- est placée premièrement une interface de données (86, 586) pour une communication point à point, pourvue d'un système externe de commande (50, 550) à mémoire programmable,
- est placé deuxièmement au moins un module de calcul et de mémoire (87, 170), qui comprend le logiciel d'application du dispositif de préhension (5, 505) et
- est placé troisièmement un régulateur (580) qui comporte au moins un régulateur de position (581), au moins un régulateur de pression (582), la commande de l'entraînement (160) pneumatique ou hydraulique et des interfaces (584) pour des capteurs de pression (180) et/ou au moins un système de mesure de déplacement ou de position (175).

2. Dispositif de préhension selon la revendication **1, caractérisé en ce que** l'entraînement (160) pneumatique ou hydraulique est une unité piston-cylindre.

3. Dispositif de préhension selon la revendication **1, caractérisé en ce que** l'interface de données (86) et le module de calcul et de mémoire (87) sont logés sur au moins une carte de circuit imprimé (24 à 27).

4. Dispositif de préhension pour la préhension mécanique de pièces à usiner l'aide de bras préhenseurs (1, 2) mobiles, comprenant :
- un boîtier (10, 23),
- des bras préhenseurs mobiles (1, 2) et
- un entraînement (120, 160) électrique logé dans le boîtier (10, 23), qui entraîne les bras préhenseurs (1, 2) mobiles,
- sur l'entraînement (120) électrique, soit le moteur d'entraînement (121) ayant un encodeur rotatif (125) ou au moins l'un des éléments constitutifs (41, 42) mus à l'aide des bras préhenseurs (1, 2) comportant un système de mesure de déplacement,
- dans ou directement sur le boîtier (10, 23) du dispositif de préhension (5, 505)
- étant placée premièrement une interface de données (86, 586) pour une communication point à point avec un système externe de commande (50, 550) à mémoire programmable,
- étant placé deuxièmement un module de calcul et de mémoire (87, 170) qui comprend le logiciel d'application du dispositif de préhension (5, 505) et
- étant placé troisièmement un servo-régulateur (80) qui comporte la commande du moteur d'entraînement (121) et qui comporte une interface d'encodeur (83) pour l'encodeur rotatif (125) ou le système de mesure de déplacement,
**caractérisé**
- **en ce que** dans ou sur le boîtier (10, 23) du dispositif de préhension (5, 505) est placé le servo-régulateur (80) qui comporte un régulateur en cascade (81) fermé, le régulateur en cascade (81) comprenant au moins une régulation de position, une régulation de vitesse et une régulation de courant.

5. Dispositif de préhension selon la revendication 4, **caractérisé en ce que** le moteur d'entraînement (121) est un moteur DC sans balais.

6. Dispositif de préhension selon la revendication 4, **caractérisé en ce que** l'encodeur rotatif (125) est un résolveur doté d'aimants émetteurs bipolaires et de plusieurs capteurs à effet Hall.

7. Dispositif de préhension selon la revendication 4, **caractérisé en ce que** l'interface de données (86), le module de calcul et de mémoire (87) ainsi que l'ensemble du servo-régulateur (80) sont logés sur au moins une carte de circuit imprimé (24 à 27).

8. Dispositif de préhension selon la revendication 3 ou 7, **caractérisé en ce que** la carte de circuit imprimé ou les cartes de circuit imprimé (24 à 27) sont fixées sur un couvercle ou sur un boîtier (23) apparent.

9. Dispositif de préhension selon la revendication 3 ou 7, **caractérisé en ce que** dans le cas de plusieurs cartes de circuit imprimé (24 à 27), celles-ci sont empilées.

10. Dispositif de préhension selon la revendication 8, **caractérisé en ce que** la carte de circuit imprimé ou les cartes de circuit imprimé (24-27) saillissent à l'intérieur de la zone du boîtier (10) dans laquelle sont logés le moteur d'entraînement (121) et les transmissions (130, 140, 150).

11. Dispositif de préhension selon la revendication 1 ou 4, **caractérisé en ce que** le module de calcul et de mémoire (87, 170) est aménagé pour convertir au moins une partie des valeurs caractéristiques physiques détectées par les capteurs (125, 175, 180) en des signaux optiques ou acoustiques.
